# EUROPEAN PATENT APPLICATION

(11) **EP 4 316 941 A1**
(43) Date of publication of application: **07.02.2024**
(21) Application number: 22780685.8
(22) Date of filing: 28.03.2022
(51) Int. Cl.: B61H 5/00, F16D 65/12, F16D 65/847

(54) **BRAKE DISC FOR RAILROAD VEHICLE**

(30) Priority: 29.03.2021 JP 2021055971
(71) Applicant: NIPPON STEEL CORPORATION, Chiyoda-ku Tokyo 100-8071 (JP)
(72) Inventor: NOGAMI, Hiroshi, Tokyo 100-8071 (JP); KATO, Takanori, Tokyo 100-8071 (JP); TAMURA, Kenji, Tokyo 100-8071 (JP); MIYABE, Naruo, Tokyo 100-8071 (JP); KANAMORI, Seiji, Nagoya-shi, Aichi 450-6101 (JP); KITAZAWA, Yuzuka, Nagoya-shi, Aichi 450-6101 (JP); KAMIYA, Masahiro, Nagoya-shi, Aichi 450-6101 (JP)
(74) Representative: Zimmermann & Partner Patentanwälte mbB
(86) International application number: PCT/JP2022/014828
(87) International publication number: WO 2022/210474

(57) **Abstract**

A brake disc (100) includes an annular disc body (10) and fins (20). The fins (20) are radially disposed on a back surface (12) of the disc body (10). At least one of the fins (20) have a bolt hole (22) at a central portion of the fin (20) in a radial direction of the disc body (10). The disc body (10) includes an inner circumferential portion (15). The inner circumferential portion (15) is positioned inward from the bolt hole (22) in the radial direction. The inner circumferential portion (15) decreases in thickness as the inner circumferential portion (15) extends inward in the radial direction. The fins (20) each include a top surface (21) and a convex portion (25). The convex portion (25) protrudes inward from an imaginary plane (S 1) in the radial direction. The imaginary plane (S 1) passes an end portion (212) of the top surface (21) and an inner circumferential edge (123) of the back surface (12).

## Description

### TECHNICAL FIELD

The present disclosure relates to a brake disc for a railway vehicle.

### BACKGROUND ART

As a braking device of a railway vehicle, a disc brake is widely used. A disk brake includes an annular brake disc and a brake lining. For example, the brake disc is fastened to a wheel and rotates with the wheel. The brake lining is pressed against a surface (sliding surface) of the brake disc. Friction between the brake lining and the brake disc makes braking possible for the brake disc and the wheel.

A brake disc used in a railway vehicle that travels at high speed, such as Shinkansen (Japanese bullet train), is required to have sufficient cooling performance (heat dissipation performance) in braking, from the viewpoint of keeping a durability of the brake disc. In particular, when a high-speed railway vehicle travels in a down grade section, braking of the brake disc is performed intermittently. At this time, if a cooling performance of the brake disc is insufficient, the brake disc becomes hot. As a result, a durability of the brake disc may be impaired. Further, the high temperature leads to the thermal expansion of the brake disc, which increases a load on a bolt that fastens the brake disc and the wheel together.

Patent Literature 1 discloses a brake disc for a railway vehicle for improving a cooling performance in braking. The brake disc has a plurality of fins on its back surface. The fins come into contact with a wheel, forming ventilation passages between the brake disc and the wheel. When the brake disc rotates together with the wheel, the ventilation passages allow air to pass from an inner circumferential side toward an outer circumferential side of the brake disc. The air cools the brake disc.

In Patent Literature 1, some of the fins have bolt holes. The bolt holes are formed at central portions of the fins in a radial direction of the brake disc. In each of the fins, grooves that extend along a circumferential direction of the brake disc are formed on an outer circumferential side and an inner circumferential side of its bolt hole. The grooves cause pressure losses in air flowing through the ventilation passages between the brake disc and the wheel, reducing aerodynamic noise.

Patent Literature 2 discloses a brake disc that is assumed to be applied to a disc brake for an automobile. The brake disc has a pair of sliding plates to be attached to an axle and a plurality of fins provided between the sliding plates. The fins extend in a radial direction of the brake disc and define ventilation passages together with their adjacent fins and the pair of sliding plates. A sliding plate of the pair of sliding plates disposed inward in an axle direction has a tapered portion on its inner circumferential side. The tapered portion is formed such that an interval between the sliding plates increases as the tapered portion extends inward in the radial direction of the brake disc. According to Patent Literature 2, the tapered portion increases opening areas of the ventilation passages on an inner circumferential side of the brake disc, decreasing inflow resistances of air against the ventilation passages. Therefore, volumes of airflow in the ventilation passages can be increased, thus increasing a cooling performance of the brake disc.

### CITATION LIST

### PATENT LITERATURE

Patent Literature 1: International Application Publication No. WO2014/038621
Patent Literature 2: Japanese Patent No. 3521266

### SUMMARY OF INVENTION

### TECHNICAL PROBLEM

As described above, when braking of a brake disc is performed intermittently in a down grade section, there is a possibility that a temperature of the brake disc may rise, impairing durabilities of the brake disc and bolts. A degree of the temperature rise of the brake disc depends on a cooling performance of the brake disc. Therefore, a brake disc for a railway vehicle is required to exert excellent cooling performance in braking.

An objective of the present disclosure is to provide a brake disc for a railway vehicle that is capable of exerting excellent cooling performance in braking.

### SOLUTION TO PROBLEM

A brake disc for a railway vehicle according to the present disclosure includes an annular disc body and a plurality of fins. The disc body has a front surface and a back surface. The plurality of fins are radially disposed on the back surface. At least one of the plurality of fins have a bolt hole at a central portion of the fin in a radial direction of the disc body. The disc body includes an inner circumferential portion. The inner circumferential portion is positioned inward from the bolt hole in the radial direction. The inner circumferential portion decreases in thickness as the inner circumferential portion extends inward in the radial direction. The fins each include a top surface and a convex portion. The top surface extends in the radial direction. The convex portion protrudes inward from an imaginary plane in the radial direction as viewed in a section of the brake disc cut in the radial direction. As viewed in the section, the imaginary plane passes an inner circumferential edge of the back surface and an end portion that is one of both end portions of the top surface, whichever is positioned inward in the radial direction.

### ADVANTAGEOUS EFFECTS OF INVENTION

The brake disc for a railway vehicle according to the present disclosure is capable of exerting excellent cooling performance in braking.

### BRIEF DESCRIPTION OF DRAWINGS

[FIG. 1] FIG. 1 is a back view of a brake disc for a railway vehicle according to a first embodiment.
[FIG. 2] FIG. 2 is a perspective view of an octant part of the brake disc illustrated in FIG. 1.
[FIG. 3] FIG. 3 is a radial sectional view of the brake disc illustrated in FIG. 1.
[FIG. 4] FIG. 4 is a diagram illustrating another brake disc that is to be compared with the brake disc for a railway vehicle according to the first embodiment.
[FIG. 5] FIG. 5 is a diagram illustrating another brake disc that is to be compared with the brake disc for a railway vehicle according to the first embodiment and is different from the brake disc illustrated in FIG. 4.
[FIG. 6] FIG. 6 is a diagram exaggeratingly illustrating heat deformation of the brake disc illustrated in FIG. 3.
[FIG. 7] FIG. 7 is a radial sectional view of a brake disc for a railway vehicle according to a second embodiment.
[FIG. 8] FIG. 8 is a schematic diagram illustrating radial sections of models used in a thermal-fluid analysis.
[FIG. 9] FIG. 9 is a graph illustrating a relation between a flow rate of ventilation obtained by the thermal-fluid analysis and a heat dissipation performance index for each model.

### DESCRIPTION OF EMBODIMENTS

A brake disc for a railway vehicle according to an embodiment includes an annular disc body and a plurality of fins. The disc body has a front surface and a back surface. The plurality of fins are radially disposed on the back surface. At least one of the plurality of fins have a bolt hole at a central portion of the fin in a radial direction of the disc body. The disc body includes an inner circumferential portion. The inner circumferential portion is positioned inward from the bolt hole in the radial direction. The inner circumferential portion decreases in thickness as the inner circumferential portion extends inward in the radial direction. The fins each include a top surface and a convex portion. The top surface extends in the radial direction. The convex portion protrudes inward from an imaginary plane in the radial direction as viewed in a section of the brake disc cut in the radial direction. As viewed in the section, the imaginary plane passes an inner circumferential edge of the back surface and an end portion that is one of both end portions of the top surface, whichever is positioned inward in the radial direction (first configuration).

In its use, a brake disc for a railway vehicle is fastened to a disc-shaped rotary member (e.g., a wheel) that is fixed to an axle. The brake disc is attached to the rotary member in such a manner that top surfaces of fins of the brake disc come into contact with a side surface of the rotary member. The fins define, together with the disc body and the rotary member, a plurality of ventilation passages that extend in the radial direction of the brake disc. In the first configuration, the thickness of the inner circumferential portion of the disc body decreases as the inner circumferential portion extends inward in the radial direction. Therefore, sectional areas of the ventilation passages are expanded on an inner circumferential side of the brake disc. This can cause, in braking, a large quantity of air to flow into the ventilation passages from the inner circumferential side of the brake disc to increase their flow rates of ventilation, thus cooling the brake disc quickly. Therefore, the brake disc according to the first configuration can exert excellent cooling performance in braking.

In general, when a brake disc for a railway vehicle excessively rises in temperature in its use, a degree of deformation of the brake disc or load stress on a bolt increase. Thus, there is a possibility that a problem in strength (a problem in durability) may arise in the brake disc. On the other hand, when braking force is reduced to avoid the excessive rise in temperature of the brake disc, a braking distance of the railway vehicle is elongated. Therefore, it is necessary to provide an appropriate heat capacity to a brake disc for a railway vehicle. Here, if the inner circumferential portion of the disc body is simply reduced in thickness, a mass of the brake disc on the inner circumferential side is reduced, and the heat capacity is decreased. As a result, there is a possibility that a localized rise in temperature may occur on the inner circumferential side of the brake disc in braking. However, in the first configuration, volumes of the fins are increased with the convex portions protruding inward in the radial direction, so that the heat capacity of the brake disc on the inner circumferential side is augmented. Therefore, the localized rise in temperature on the inner circumferential side of the brake disc can be avoided. That is, by providing the fins with the convex portions protruding inward in the radial direction, the appropriate heat capacity can be provided to the brake disc. Thus, the rise in temperature of the brake disc can be prevented without unnecessary reduction of the braking force. Therefore, a durability required of a brake disc for a railway vehicle can be kept.

Air flows into the ventilation passages from the inner circumferential side of the brake disc. Therefore, when the volumes of the fins are increased on the inner circumferential side of the brake disc, it is expected that the fins limit inflows of air into the ventilation passages, degrading the cooling performance. However, according to results of an examination conducted by the present inventors, the convex portions protruding inward in the radial direction expand surface areas of the fins, thus rather improving the cooling performance of the brake disc. That is, the brake disc according to the first configuration can exert much more excellent cooling performance in braking with the convex portions of the fins. Accordingly, an endpoint temperature in a temperature rise of the brake disc can be lowered. As a result, the degree of deformation of the brake disc and the load stress on a bolt can be reduced, and the durability required of a brake disc for a railway vehicle can be kept. In addition, the speed of cooling the brake disc after the temperature rise can be increased, and thus a time taken to cool the brake disc can be shortened. This makes it easy to repeat braking intermittently to suppress a speed of a railway vehicle, for example.

The fin having the bolt hole may include grooves that traverse the fin. The grooves of the fin are disposed outward and inward from the bolt hole in the radial direction (second configuration).

In general, when the flow rates of ventilation in the ventilation passages increase, aerodynamic noise produced when a railway vehicle travels increases. To cope with this, in the second configuration, the or each fin having the bolt hole is provided with grooves that traverse the fin. Edge portions and wall surfaces of the grooves cause pressure losses in air flowing through the ventilation passages, reducing flow rates of ventilation in the ventilation passages. As a result, occurrence of aerodynamic noise in traveling can be suppressed.

In the second configuration, the grooves formed in the fin slightly reduce the flow rates of ventilation in the ventilation passages but increase the surface area of the fin. Therefore, the cooling of the brake disc can be accelerated in braking. In this manner, the brake disc according to the second configuration can suppress the occurrence of aerodynamic noise while maintaining the excellent cooling performance in braking.

The inner circumferential portion of the disc body may have a tapered surface. The tapered surface constitutes a part of the back surface of the disc body. The tapered surface decreases in diameter as the tapered surface extends toward the front surface side of the disc body. As viewed in a section of the brake disc cut in the radial direction, an angle formed by the tapered surface with the front surface of the disc body is preferably 25° or more to 45° or less (third configuration).

When a brake lining is pressed against the front surface of the disc body, heat generated by friction between the disc body and the brake lining subjects the brake disc to heat deformation in an arch shape in which both end portions of each fin in the radial direction serve as supports of the arch shape. In this case, the inner circumferential portion of the disc body approaches the rotary member, shrinking sectional areas of the ventilation passages in the vicinities of their inlets. Therefore, quantities of air that flow into the ventilation passages are reduced.

In contrast, in the brake disc according to an embodiment, the sectional areas of the ventilation passages in the vicinities of their inlets are expanded by making the inner circumferential portion of the disc body thin. As a result, even when heat deformation occurs in the brake disc, relatively large quantities of air can be caused to flow into the ventilation passages, and thus flow rates of ventilation in the ventilation passages can be maintained.

Further, in the third configuration, in the inner circumferential portion of the disc body, a tapered surface that decreases in diameter as the tapered surface extends from the back surface toward the front surface is formed. The tapered surface is inclined by 25° or more in such a manner as to become more distant from the rotary member as the tapered surface extends toward the inner circumferential side of the brake disc, thus providing large opening areas (inlet areas) of the ventilation passages. This enables the inclination of the tapered surface to be maintained even when the heat deformation occurs in the brake disc, thus enabling the opening areas of the ventilation passages to be maintained to a certain extent. Therefore, the reduction in the flow rates of ventilation caused by the heat deformation of the brake disc can be prevented. In addition, the region of the thin inner circumferential portion does not become too wide in the disc body, and a rigidity balance described later can be maintained.

In the third configuration, an angle of the tapered surface is set to 45° or less in the inner circumferential portion of the disc body. This gradually shrinks the sectional areas of the ventilation passages without a sharp change as the ventilation passages extend from the inner circumferential side toward the outer circumferential side of the disc body. Therefore, the pressure losses in air flowing through the ventilation passages can be reduced, and the flow rates of ventilation in the ventilation passages can be kept sufficiently.

The inner circumferential portion of the disc body may have a curved surface. The curved surface constitutes a part of the back surface of the disc body. A distance between the curved surface and the front surface of the disc body decreases as the curved surface extends inward in the radial direction. As viewed in a section of the brake disc cut in the radial direction, an angle formed by a tangential line having the largest gradient with respect to the front surface of the disc body of the tangential lines of the curved surface and the front surface of the disc body, is preferably 25° or more to 45° or less (fourth configuration).

In the fourth configuration, the back surface of the disc body is provided with the curved surface that makes the disc body thin as the disc body extends inward in the radial direction. The angle formed by the tangential line having the largest gradient of the tangential lines of the curved surface and the front surface of the disc body is set to 25° or more. This causes the disc body to become sufficiently distant from the rotary member as the disc body extends toward the inner circumferential side of the brake disc, thus providing large opening areas of the ventilation passages. Therefore, even when the heat deformation occurs in the brake disc, a distance between the disc body and the rotary member does not excessively decrease on the inner circumferential side of the brake disc. Thus, the opening areas of the ventilation passages can be maintained to a certain extent. Accordingly, the reduction in the flow rates of ventilation caused by the heat deformation of the brake disc can be prevented. In addition, the region of the thin inner circumferential portion does not become too wide in the disc body, and the rigidity balance described later can be maintained.

In the fourth configuration, in the disc body, the tangential line of the curved surface on the back surface side forms an angle of 45° or less with the front surface. This gradually shrinks the sectional areas of the ventilation passages without a sharp change as the ventilation passages extend from the inner circumferential side toward the outer circumferential side of the disc body. Therefore, the pressure losses in air flowing through the ventilation passages can be reduced, and the flow rates of ventilation in the ventilation passages can be kept sufficiently.

L1/L0 is preferably 1/4 or less. L0 is a length of the fin having the bolt hole in the radial direction. L1 is a length of the inner circumferential portion in the radial direction (fifth configuration).

In the case where the fins are provided with the bolt holes at their central portions, if a thin portion is formed over a wide area of the disc body, the brake disc loses a rigidity balance between outer circumferential side and inner circumferential side with respect to the bolt holes. As a result, in braking, heat deformation that is asymmetric between the outer circumferential side and the inner circumferential side of the brake disc across bolts inserted into the bolt holes occurs, which increases bending stresses produced in the bolts. In contrast, in the fifth configuration, the length of the thin inner circumferential portion of the disc body is 1/4 or less of the length of the fin, thus confining a region of thinning in the disc body. This enables the brake disc to maintain the rigidity balance between the outer circumferential side and the inner circumferential side with respect to the bolt hole. Therefore, the bending stress produced in the bolt can be reduced, and durability of the bolt can be kept.

The disc body can further have a plurality of projections on the back surface (sixth configuration).

In the sixth configuration, the projections on the back surface of the disc body expand a surface area of the brake disc. This enables the cooling of the brake disc to be accelerated in braking.

Brake discs for a railway vehicle according to embodiments of the present disclosure will be described below with reference to the drawings. In the drawings, the same or equivalent components will be denoted by the same reference numerals, and description of the parts will not be repeated. The drawings are schematic diagrams for describing primary configurations of the brake discs according to the embodiments. Therefore, detailed shapes, dimensional ratios, and the like of the brake discs illustrated in the drawings may differ from those of an actual brake disc.

### <First Embodiment>

### [Configuration of Brake Disc]

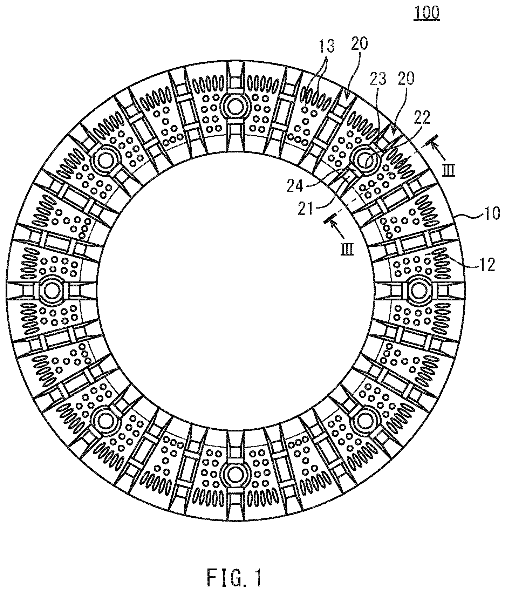

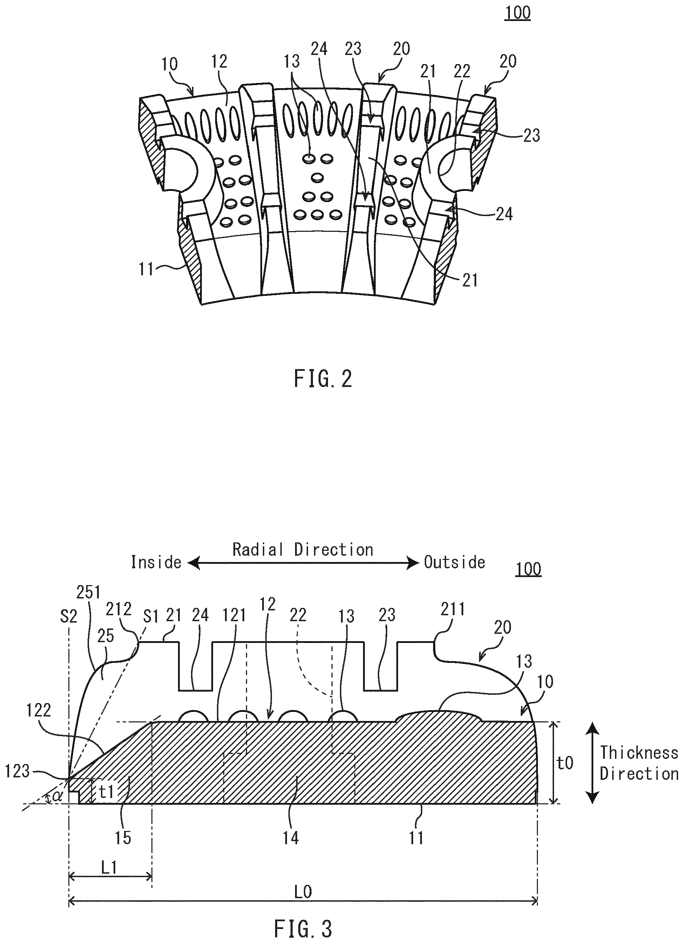

FIG. 1 is a back view of a brake disc 100 for a railway vehicle according to a first embodiment. FIG. 2 is a perspective view of an octant part of the brake disc 100 illustrated in FIG. 1. The brake disc 100 is fastened to a rotary member (illustration omitted) of a railway vehicle. The rotary member is an annular disc. The rotary member is fixed to an axle and rotates with the axle. The rotary member is, for example, a wheel.

Referring to FIG. 1 and FIG. 2, the brake disc 100 includes a disc body 10 and a plurality of fins 20.

The disc body 10 is an annular disc. The disc body 10 has a front surface 11 and a back surface 12. The front surface 11 is a sliding surface against which a brake lining (illustration omitted) is to be pressed. The back surface 12 is a surface that faces oppositely to the front surface 11. When the brake disc 100 is fastened to the rotary member, the back surface 12 faces a side surface of the rotary member. Hereinafter, a radial direction and a circumferential direction of the disc body 10 will be simply referred to as a radial direction and a circumferential direction, respectively, and a direction that is perpendicular to both the radial direction and the circumferential direction will be referred to as a thickness direction, for convenience of description.

The disc body 10 has a plurality of projections 13 on the back surface 12. The projections 13 each have, for example, a hemispherical shape or a hemiellipsoidal shape. Each of the projections 13 may have the same shape as another projection 13 and may have a shape different from a shape of the other projection 13.

The plurality of fins 20 are radially disposed on the back surface 12 of the disc body 10. The fins 20 extend from an inner circumferential side toward an outer circumferential side of the disc body 10. Each of the fins 20 includes a top surface 21 that extends in the radial direction. When the brake disc 100 is fastened to the rotary member, the top surface 21 comes into contact with the side surface of the rotary member. This forms a space surrounded by the rotary member, fins 20 adjacent to each other in the circumferential direction, and the disc body 10. The space serves as a ventilation passage through which air passes when the brake disc 100 rotates with the rotary member.

At least one of the fins 20 has a bolt hole 22 at a central portion of the fin in a radial direction of the disc body. In the example described in the present embodiment, among the plurality of fins 20 disposed on the back surface 12 of the disc body 10, only some fins 20 are provided with bolt holes 22. The bolt holes 22 penetrate the fins 20 and the disc body 10 in the thickness direction. When the brake disc 100 is fastened to the rotary member, bolts (illustration omitted) are inserted through the bolt holes 22.

Each of the fins 20 with the bolt holes 22 has grooves 23 and 24. The grooves 23 and 24 each have a shape that is concave from the top surface 21 toward the disc body 10. The grooves 23 and 24 generally extend in the circumferential direction and traverse the fin 20.

The grooves 23 and 24 are disposed on both sides of the bolt hole 22 in the radial direction. The groove 23 is provided outward from the bolt hole 22 in the radial direction. The groove 24 is provided inward from the bolt hole 22 in the radial direction. The grooves 23 and 24 are not limited to a specific shape. Wall surfaces and bottom surfaces of the grooves 23 and 24 each can be formed as a flat surface, a convex surface, or a concave surface, or a combination thereof. In the present embodiment, fins 20 without bolt holes 22 also have grooves 23 and 24.

With reference to FIG. 3, the configuration of the disc body 10 and the fins 20 will be described in more detail. FIG. 3 is a sectional view of the brake disc 100 illustrated in FIG. 1 taken along the III-III line. That is, FIG. 3 is a sectional view taken by cutting the brake disc 100 along the radial direction. Hereinafter, a section of the brake disc 100 along the radial direction will be referred to as a radial section.

The disc body 10 includes an outer circumferential portion 14 and an inner circumferential portion 15. The inner circumferential portion 15 is positioned inward from the bolt hole 22 in the radial direction. In more detail, the inner circumferential portion 15 is positioned inward from the groove 24 in the radial direction. The outer circumferential portion 14 is a portion that is positioned outward from the inner circumferential portion 15 in the radial direction in the disc body 10 and encircles the inner circumferential portion 15.

The outer circumferential portion 14 includes a main back surface 121. The main back surface 121 is a main portion of the back surface 12. The main back surface 121 is a flat surface that is substantially parallel to the front surface 11. This makes a thickness t0 of the outer circumferential portion 14 generally constant in the radial direction. The thickness t0 is a length from the main back surface 121 to the front surface 11 in the thickness direction. The thickness t0 can be set to, for example, 17 mm to 25 mm.

The projections 13 described above are formed on the main back surface 121. In more detail, the plurality of projections 13 are formed on the main back surface 121 between the fins 20 adjacent to each other in the circumferential direction. With consideration given to formability, it is preferable that projections 13 positioned on the outer circumferential side of the disc body 10 each have a hemiellipsoidal shape. The other projections 13 can be formed in a hemispherical shape.

The inner circumferential portion 15 includes a tapered surface 122. The tapered surface 122 constitutes a part of the back surface 12. The tapered surface 122 is connected to the main back surface 121. The tapered surface 122 may be directly connected to the main back surface 121 and may be indirectly connected to the main back surface 121 via a C chamfer surface, an R chamfer surface, or the like.

The tapered surface 122 is a conical surface that decreases in diameter as the conical surface extends toward the front surface 11 side of the disc body 10. As viewed in a radial section of the brake disc 100, the tapered surface 122 is inclined in such a manner as to approach the front surface 11 as the tapered surface 122 extends inward in the radial direction. As viewed in a radial section of the brake disc 100, an angle α formed by the tapered surface 122 with the front surface 11 is preferably 25° or more to 45° or less.

The tapered surface 122 makes the inner circumferential portion 15 decrease in thickness as the inner circumferential portion 15 extends inward in the radial direction. That is, the inner circumferential portion 15 is gradually made thinner as the inner circumferential portion 15 extends from the outer circumferential portion 14 side toward an edge of the disc body 10 on the inner circumferential side. The inner circumferential portion 15 has a minimum thickness t1 at a position of an inner circumferential edge 123 of the back surface 12 of the disc body 10.

The minimum thickness t1 refers to a length from the inner circumferential edge 123 of the back surface 12 to the front surface 11 in the thickness direction. In the present embodiment, a notch portion is provided in the inner circumferential portion 15 on the front surface 11 side. The minimum thickness t1 is a thickness that is set without consideration given to the notch portion. The minimum thickness t1 can be set to, for example, 3 mm to 12 mm. A ratio t1/t0 of the minimum thickness of the inner circumferential portion 15 to the thickness of the outer circumferential portion 14 is preferably 0.12 to 0.70. By setting t1/t0 to 0.12 or more, a minimum heat capacity and a minimum strength necessary for the disc body 10 on the inner circumferential side can be kept. At the same time, by setting t1/t0 to 0.70 or less, opening areas of the ventilation passages are expanded, and an effect of increasing volumes of airflow in the ventilation passages can be sufficiently exerted in the brake disc 100.

As illustrated in FIG. 3, each fin 20 includes a convex portion 25. The convex portion 25 is a portion of the fin 20 that protrudes inward from an imaginary plane S1 in the radial direction. As viewed in a radial section of the brake disc 100, the convex portion 25 is provided between the imaginary plane S1 to an imaginary plane S2. The imaginary plane S1 is an imaginary plane that passes an end portion 212, which is one of both end portions 211 and 212 of the top surface 21, whichever is positioned inward in the radial direction, and the inner circumferential edge 123 of the back surface 12 of the disc body 10. The imaginary plane S2 is an imaginary plane that passes the inner circumferential edge 123 of the back surface 12 and extends in the thickness direction.

The convex portion 25 has a surface 251 that faces inward in the radial direction. In the present embodiment, the surface 251 is constituted by a smoothly curved surface. The surface 251 may be constituted by flat surfaces. In a radial section of the brake disc 100, the surface 251 can be constituted by a plurality of types of curves and/or lines in combination.

Each fin 20 with the bolt hole 22 has a length L0 in the radial direction. The inner circumferential portion 15 has a length L1 in the radial direction. The length L1 of the inner circumferential portion 15 is preferably 1/4 or less of the length L0 of the fin 20. The length L1 of the inner circumferential portion 15 is defined, in a radial section of the brake disc 100, as a length in the radial direction from the inner circumferential edge 123 of the back surface 12 to an intersection of an extension of the tapered surface 122 and an extension of the main back surface 121. The length L0 of the fin 20 is a maximum length of the fin 20 in the radial direction. In the present embodiment, a position of an end portion of the fin 20 on its inner side in the radial direction matches a position of the inner circumferential edge 123 of the back surface 12 of the disc body 10.

### [Effects of First Embodiment]

In the brake disc 100 according to the present embodiment, the thickness of the inner circumferential portion 15 of the disc body 10 decreases as the inner circumferential portion 15 extends inward in the radial direction. This expands, on the inner circumferential side of the brake disc 100, sectional areas of ventilation passages that are formed by the rotary member of the railway vehicle, the fins 20 adjacent to each other in the circumferential direction, and the disc body 10. As a result, in braking of the rotary member, quantities of air that flows from the inner circumferential side of the brake disc 100 into the ventilation passages (flow rates of ventilation) can be increased. Therefore, the brake disc 100 can exert excellent cooling performance in braking.

In the present embodiment, a volume of the fin 20 is increased with the convex portion 25, on the inner circumferential side of the brake disc 100. As a result, a heat capacity of the brake disc 100 can be kept on the inner circumferential side of the brake disc 100 despite the thinning of the inner circumferential portion 15 of the disc body 10. Therefore, the inner circumferential side of the brake disc 100 can be prevented from locally rising in temperature in braking. As a result, a durability of the brake disc 100 required of a brake disc for a railway vehicle can be kept.

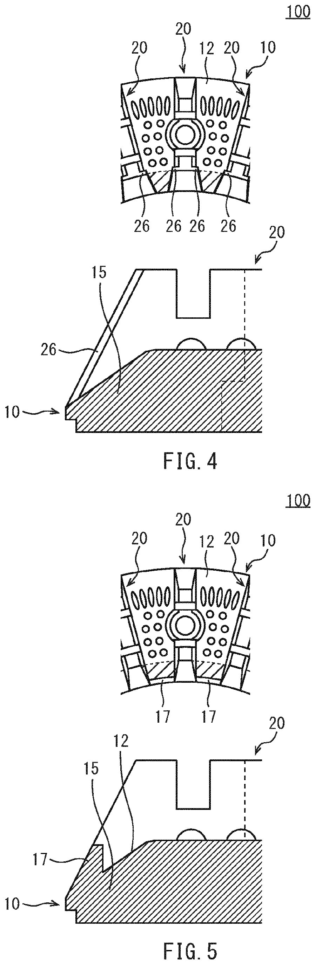

To increase a heat capacity of the brake disc 100 on the inner circumferential side, it is conceivable to make a part or parts of the fins 20 protrude in the circumferential direction on the inner circumferential side of the brake disc 100. For example, as illustrated in FIG. 4, in order simply to increase the heat capacity of the brake disc 100 on the inner circumferential side, it is conceivable to provide projecting portions 26 on both side surfaces of the fins 20 on the inner circumferential side of the brake disc 100. In this case, however, the sectional areas of the ventilation passages are reduced on the inner circumferential side of the brake disc 100 particularly in the circumferential direction. Therefore, the flow rates of ventilation in the ventilation passages are reduced. That is, as illustrated with hatching in the upper part of FIG. 4, air inlet planes of the ventilation passages are shrunk by the projecting portions 26, and ventilation properties between the brake disc 100 and the rotary member are degraded. As a result, the cooling performance of the brake disc 100 is degraded. Further, in the case where the fins 20 are partially made to protrude in the circumferential direction, portions where the sectional areas are sharply expanded are formed in the ventilation passages extending in the radial direction. As a result, pressure losses in air flowing through the ventilation passages increase, reducing the flow rates of ventilation, and flow velocities of the air and heat transfer coefficients on surfaces of the ventilation passages decrease as going outward in the radial direction.

Alternatively, in order simply to increase the heat capacity of the brake disc 100 on the inner circumferential side, it is also conceivable to provide convex portions 17 on the back surface 12 of the disc body 10 on the inner circumferential side of the brake disc 100, as illustrated in FIG. 5. In this case, however, the sectional areas of the ventilation passages are reduced on the inner circumferential side of the brake disc 100 particularly in the thickness direction. Therefore, the flow rates of ventilation in the ventilation passages are reduced. That is, as illustrated with hatching in the upper part of FIG. 5, air inlet planes of the ventilation passages are shrunk by the convex portions 17, and the ventilation properties between the brake disc 100 and the rotary member are degraded. As a result, the cooling performance of the brake disc 100 is degraded.

In contrast, in the present embodiment, the fins 20 are made to protrude inward in the radial direction to form the convex portions 25 on the inner circumferential side of the brake disc 100. The convex portions 25 do not protrude into the ventilation passages. Therefore, the convex portions 25 do not cause to substantially reduce the sectional areas of the ventilation passages on the inner circumferential side of the brake disc 100. That is, the air inlet planes of the ventilation passages are not shrunk by the convex portions 25, and good ventilation properties between the brake disc 100 and the rotary member can be kept. Therefore, the heat capacity of the brake disc 100 can be increased while the excellent cooling performance of the brake disc 100 is maintained.

In addition, surface areas of the fins 20 are expanded by the convex portions 25 protruding inward in the radial direction. Thus, an effect of further accelerating cooling of the brake disc 100 can be provided. Therefore, the brake disc 100 can exert much more excellent cooling performance in braking.

In the present embodiment, in each fin 20, the grooves 23 and 24 that traverse the fin 20 are formed. Edge portions and the wall surfaces of the grooves 23 and 24 cause pressure losses in air flowing through the ventilation passages, reducing flow rates of ventilation in the ventilation passages. As a result, occurrence of aerodynamic noise in braking can be suppressed. At the same time, the grooves 23 and 24 expand the surface area of the fin 20, accelerating the cooling of the brake disc 100 in braking. Therefore, the cooling performance of the brake disc 100 in braking can be kept.

In the present embodiment, all the fins 20 have the grooves 23 and 24. However, the grooves 23 and 24 are not essential components for the fins 20. Some or all of the fins 20 need not have the grooves 23 and 24. For example, the grooves 23 and 24 can be formed only in fins 20 provided with the bolt holes 22.

A rigidity balance of the brake disc 100 in the radial direction is influenced by both a rigidity of the disc body 10 and rigidities of the fins 20. In the case where the thin inner circumferential portion 15 reaches the groove 24 in a radial section of the brake disc 100, the rigidities in the vicinity of the groove 24, which is on the inner circumferential side of the bolt hole 22, become lower than the rigidities in the vicinity of the groove 23, which is on the outer circumferential side of the bolt hole 22. As a result, in braking, heat deformation that is asymmetric with respect to a bolt in the bolt hole 22 becomes likely to occur in the brake disc 100, and bending stress produced in the bolt increases. As a result, there is a possibility that a durability of the bolt may be impaired.

In the present embodiment, with consideration given to this regard, the thin inner circumferential portion 15 of the disc body 10 is disposed inward from the groove 24 in the radial direction. This balances the rigidity of the brake disc 100 between the inner circumferential side and the outer circumferential side with respect to the bolt hole 22, and the asymmetric heat deformation of the brake disc 100 becomes unlikely to occur in braking. Therefore, the bending stress produced in the bolt in the bolt hole 22 can be reduced, and the durability of the bolt can be kept.

In the present embodiment, the tapered surface 122 makes the inner circumferential portion 15 of the disc body 10 gradually increase in thickness as the inner circumferential portion 15 extends outward in the radial direction. As a result, the sectional areas of the ventilation passages are gradually shrunk without a sharp change as the ventilation passages extend from the inner circumferential side toward the outer circumferential side of the disc body 10. Therefore, the pressure losses in air flowing through the ventilation passages can be reduced, and the flow rates of ventilation in the ventilation passages can be kept sufficiently.

In the brake disc 100 according to the present embodiment, the angle α formed by the tapered surface 122 of the back surface 12 with the front surface 11 is preferably set to 25° or more. This enables the inclination of the tapered surface 122 with respect to the rotary member to be maintained even in heat deformation of the brake disc 100.

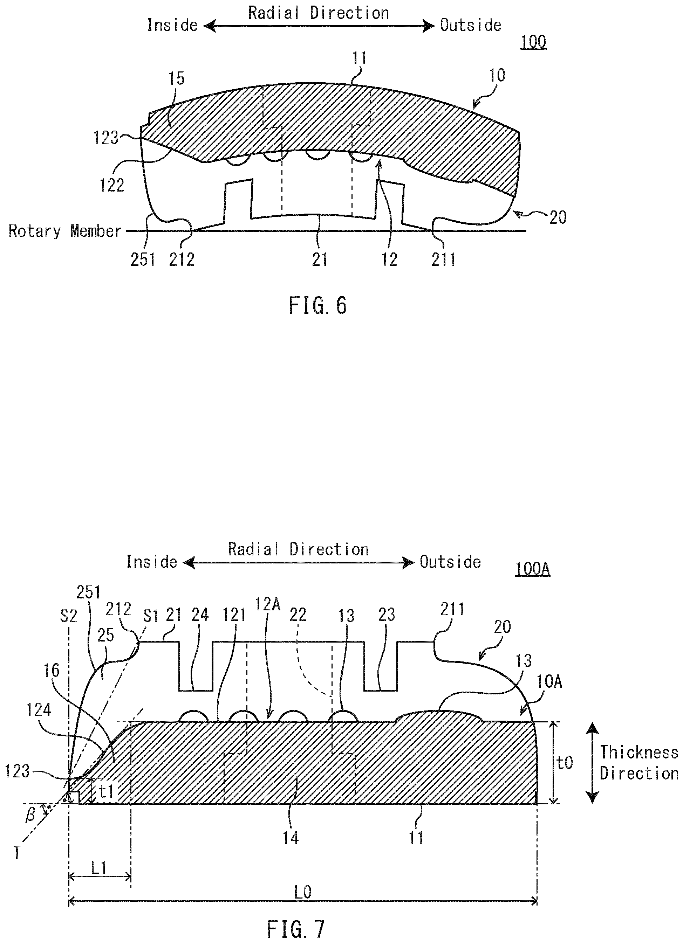

FIG. 6 is a diagram exaggeratingly illustrating the heat deformation of the brake disc 100. As illustrated in FIG. 6, when the brake disc 100 is subjected in braking to the heat deformation in an arch shape in which both end portions 211 and 212 of the top surface 21 of the fin 20 serve as supports of the arch shape, the outer circumferential side and the inner circumferential side of the brake disc 100 approach the rotary member, and an opening angle between the rotary member and the tapered surface 122 (the inclination of the tapered surface 122 with respect to the rotary member) is decreased. In the present embodiment, a large opening angle is provided in advance as the opening angle by inclining the tapered surface 122 by 25° or more with respect to the front surface 11. As a result, even when the heat deformation of the brake disc 100 occurs, the opening angle between the rotary member and the tapered surface 122 is retained, and a distance between the rotary member and the inner circumferential edge 123 of the back surface 12 (an inlet area of the ventilation passage) can be maintained to a certain extent. Therefore, even in the heat deformation of the brake disc 100, the flow rates of ventilation in the ventilation passages can be prevented from reducing, and high cooling performance in braking can be kept. In addition, the region of the thin inner circumferential portion 15 does not become too wide in the disc body 10, and the rigidity balance between the outer circumferential side and the inner circumferential side can be maintained.

With consideration given to the heat deformation of the brake disc 100 in an arch shape as illustrated in FIG. 6, the surface 251 of the fin 20 is preferably constituted by a curved surface. When the surface 251 has a curved shape, the rotary member is unlikely to be scratched by the fin 20 even when the heat deformation causes the fin 20 to come into contact with the rotary member.

In the present embodiment, the length L1 of the inner circumferential portion 15 of the disc body 10 in the radial direction is preferably set to 1/4 or less of the length L0 of the fin 20 in the radial direction. This confines the region of the thin inner circumferential portion 15 in the disc body 10. Therefore, the brake disc 100 can maintain the rigidity balance between the outer circumferential side and the inner circumferential side with respect to the bolt hole 22, and occurrence of the heat deformation asymmetric between the outer circumferential side and the inner circumferential side with respect to the bolt hole 22 can be prevented. As a result, the bending stress produced in the bolt in the bolt hole 22 can be reduced, and the durability of the bolt can be kept.

In the brake disc 100 according to the present embodiment, the angle α formed by the tapered surface 122 of the inner circumferential portion 15 with the front surface 11 is preferably set to 45° or less. In this case, the sectional areas of the ventilation passages are gradually shrunk without a sharp change as the ventilation passages extend from the inner circumferential side toward the outer circumferential side of the disc body 10. Therefore, the pressure losses in air flowing through the ventilation passages can be reduced, and the flow rates of ventilation in the ventilation passages can be kept sufficiently.

In the present embodiment, the plurality of projections 13 are provided on the back surface 12 of the disc body 10. The projections 13 expand a surface area of the disc body 10. Therefore, the cooling of the brake disc 100 in braking can be accelerated.

The projections 13 are not essential components for the disc body 10. That is, the back surface 12 of the disc body 10 need not be provided with the projections 13.

### <Second Embodiment>

FIG. 7 is a radial sectional view of a brake disc 100A according to a second embodiment. The brake disc 100A according to the present embodiment is different from the brake disc 100 according to the first embodiment (FIG. 3) in a shape of an inner circumferential portion 16 of a disc body 10A.

The inner circumferential portion 16 includes a curved surface 124. The curved surface 124 constitutes a part of a back surface 12A. The curved surface 124 is configured by a composite circular arc surface. A distance between the curved surface 124 and a front surface 11 substantially decreases as the curved surface 124 extends inward in a radial direction. The inner circumferential portion 16 has, as in the first embodiment, a minimum thickness t1 at a position of an inner circumferential edge 123 of the back surface 12A of the disc body 10A.

As viewed in a radial section of the brake disc 100A, an angle β formed by a tangential line T of the curved surface 124 with the front surface 11 is preferably 25° or more to 45° or less. The tangential line T of the curved surface 124 is a tangential line that has the largest gradient with respect to the front surface 11 of tangential lines of the curved surface 124. By setting the angle β to 25° or more, even when heat deformation of the brake disc 100A occurs, a distance between the inner circumferential edge 123 of the back surface 12A and a rotary member (an opening area of an inlet of a ventilation passage) can be maintained to a certain extent, as in the first embodiment. In addition, a region of the thin inner circumferential portion 16 does not become too wide in the disc body 10A, and a rigidity balance between the outer circumferential side and the inner circumferential side can be maintained. At the same time, by setting the angle β to 45° or less, sectional areas of ventilation passages are gradually shrunk without a sharp change as the ventilation passages extend from the inner circumferential side toward the outer circumferential side of the disc body 10A. Therefore, the pressure losses in air flowing through the ventilation passages can be reduced, and the flow rates of ventilation in the ventilation passages can be kept sufficiently.

From the viewpoint of confining a region of thinning in the disc body 10A, a length L 1 of the inner circumferential portion 16 is preferably set to 1/4 or less of a length L0 of a fin 20 as in the first embodiment. The length L1 of the inner circumferential portion 16 is defined, in a radial section of the brake disc 100A, as a length in the radial direction from the inner circumferential edge 123 of the back surface 12A to an intersection of the tangential line T of the curved surface 124 and an extension of a main back surface 121.

Also in the present embodiment, as in the first embodiment, the inner circumferential portion 16 of the disc body 10A decreases in thickness as the inner circumferential portion 16 extends inward in the radial direction. As a result, sectional areas of the ventilation passages are expanded on the inner circumferential side of the brake disc 100A. Therefore, when a brake is applied to a rotary member of a railway vehicle, flow rates of ventilation in the ventilation passages can be increased, which enables the brake disc 100A to exert excellent cooling performance.

Embodiments according to the present disclosure are described above, but the present disclosure is not limited to the above embodiments, and various modifications can be made without departing the scope of the present disclosure.

### EXAMPLE

The present disclosure will be described below in more detail with Examples. Note that the present disclosure is not limited to the following Examples.

To examine the effects provided by the brake disc for a railway vehicle according to the present disclosure, general-purpose thermal-fluid analysis software (product name: ANSYS Fluent, from ANSYS, Inc.) was used to conduct a three-dimensional thermal-fluid analysis assuming that a railway vehicle is traveling at a constant speed of 360 km/h. Basic specifications of a brake disc used in the thermal-fluid analysis are as follows.

### <Basic Specifications>

- Forged steel brake disc for Shinkansen
- Inner diameter of disc body: 466 mm
- Outer diameter of disc body: 722 mm
- Length L0 of fin in radial direction: 128 mm
- Bolt holes: Disposed such that their centers are positioned on a circumference of a circle with a diameter of 585 mm

As an evaluation index that indicates a cooling performance of the brake disc, a heat dissipation performance index was used. The heat dissipation performance index is a value of the product of an average heat transfer coefficient of a surface of the disc and a surface area of the disc (in traveling at a constant speed of 360 km/h, per brake disc). A higher heat dissipation performance index means a higher cooling performance of the brake disc.

As an evaluation index that indicates a level of aerodynamic noise, a flow rate of ventilation was used. The flow rate of ventilation is a flow rate of ventilation between the brake disc and a wheel (rotary member) in traveling at a constant speed of 360 km/h. As described in International Application Publication No. WO2010/071169, there is a strong correlation between a flow rate of ventilation between a brake disc and a wheel, and a level of aerodynamic noise. For this reason, a flow rate of ventilation (per unit time) obtained by the thermal-fluid analysis was used as the index for evaluating the level of aerodynamic noise. A larger flow rate of ventilation can be considered as a higher level of aerodynamic noise.

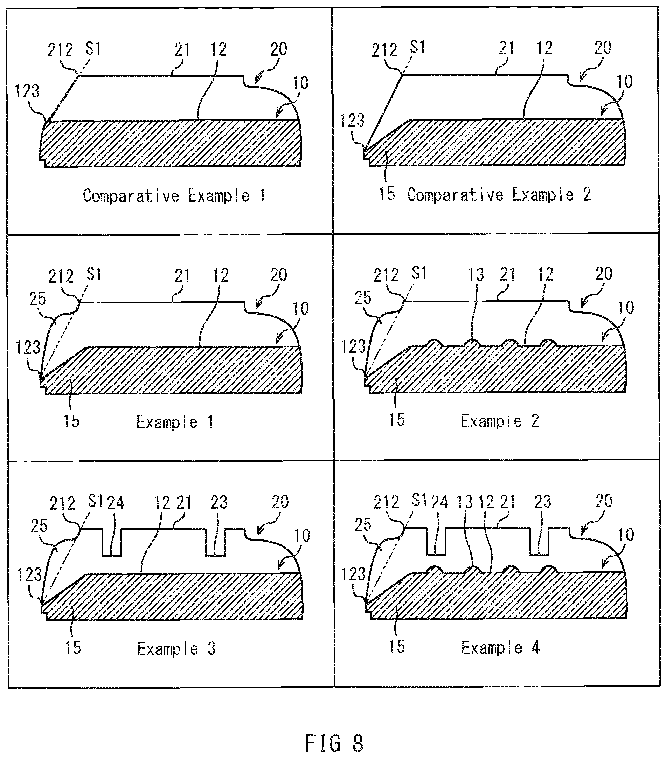

FIG. 8 is a schematic diagram illustrating radial sections of models used in the thermal-fluid analysis. In models in Examples 1 to 4, their disc bodies 10 are each provided with a thin inner circumferential portion 15, and their fins 20 are each provided with a convex portion 25, as with the brake disc 100 according to the first embodiment. In the models in Examples 2 and 4, a plurality of projections 13 are provided on a back surface 12 of each of their disc bodies 10. In the models in Examples 3 and 4, their fins 20 are each provided with grooves 23 and 24.

In a model in Comparative Example 1, its disc body 10 is not provided with a thin inner circumferential portion 15, and its fins 20 are not provided with convex portions 25. In a model in Comparative Example 2, its disc body 10 is provided with a thin inner circumferential portion 15, while its fins 20 are not provided with convex portions 25.

In Examples 1 to 4 and Comparative Example 2, the angles α of their inner circumferential portions 15 were set to 39°, and the ratios L1/L0 of lengths of their inner circumferential portions 15 to lengths of their fins 20 were set to 0.16. The definitions of the angles α and the lengths L0 and L1 were as described in the embodiment described above (FIG. 3).

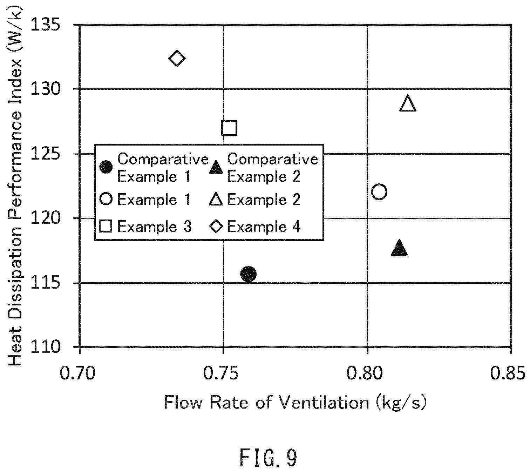

FIG. 9 is a graph illustrating a relation between the flow rate of ventilation obtained by the thermal-fluid analysis and the heat dissipation performance index for each model. As illustrated in FIG. 9, the heat dissipation performance index of the model in Comparative Example 2 is higher than the heat dissipation performance index of the model in Comparative Example 1. It is therefore understood that providing the thin inner circumferential portion 15 to the disc body 10 improves a cooling performance of the brake disc.

The heat dissipation performance indices of the models in Examples 1 to 4 are even higher than the heat dissipation performance index of the model in Comparative Example 2. That is, providing the thin inner circumferential portion 15 to the disc body 10 as well as providing the fins 20 with the convex portions 25 protruding inward in the radial direction can impart excellent cooling performance to the brake disc.

The heat dissipation performance indices of the models in Examples 2 to 4 are higher than the heat dissipation performance index of the model in Example 1. It is considered that the projections 13 of the disc body 10 and/or the grooves 23 and 24 of the fins 20 expanded the surface area of the brake disc, thus further improving the cooling performance of the brake disc.

The flow rates of ventilation of the models in Examples 3 and 4 are smaller than the flow rates of ventilation of the models in Examples 1 and 2. It is therefore understood that the grooves 23 and 24 of the fins 20 are effective not only in improving the cooling performance of the brake disc but also in reducing the aerodynamic noise.

### REFERENCE SIGNS LIST

100, 100A: brake disc
10, 10A: disc body
11: front surface
12: back surface
122: tapered surface
123: inner circumferential edge
124: curved surface
13: projection
15, 16: inner circumferential portion
20: fin
21: top surface
22: bolt hole
23, 24: groove
25: convex portion

## Claims

1. A brake disc for a railway vehicle, comprising:
a disc body that has a front surface and a back surface, the disc body being annular; and
a plurality of fins that are radially disposed on the back surface, at least one of the fins having a bolt hole at a central portion of the fin in a radial direction of the disc body, wherein
the disc body includes an inner circumferential portion that is positioned inward from the bolt hole in the radial direction and decreases in thickness as the inner circumferential portion extends inward in the radial direction, and
the fins each include:
a top surface that extends in the radial direction; and
a convex portion that, as viewed in a section of the brake disc cut in the radial direction, protrudes inward in the radial direction from an imaginary plane passing an end portion of the top surface and an inner circumferential edge of the back surface, the end portion being one of both end portions of the top surface, whichever is positioned inward in the radial direction.

2. The brake disc according to claim 1, wherein the fins having the bolt hole includes grooves that are disposed outward and inward from the bolt hole in the radial direction and traverse the fin.

3. The brake disc according to claim 1 or 2, wherein
the inner circumferential portion has a tapered surface that constitutes a part of the back surface and decreases in diameter as the tapered surface extends toward the front side, and
as viewed in a section of the brake disc cut in the radial direction, an angle formed by the tapered surface with the front surface is 25° or more to 45° or less.

4. The brake disc according to claim 1 or 2, wherein
the inner circumferential portion has a curved surface that constitutes a part of the back surface, a distance between the curved surface and the front surface decreasing as the curved surface extends inward in the radial direction, and
as viewed in a section of the brake disc cut in the radial direction, an angle formed by a tangential line of the curved surface with the front surface is 25° or more to 45° or less, the tangential line having a largest gradient with respect to the front surface of tangential lines of the curved surface.

5. The brake disc according to any one of claims 1 to 4, wherein when a length of the fin having the bolt hole in the radial direction is denoted by L0, and a length of the inner circumferential portion in the radial direction is denoted by L1, L1/L0 is 1/4 or less.

6. The brake disc according to any one of claims 1 to 5, wherein the disc body further includes a plurality of projections on the back surface.
